Europäisches Patentamt

European Patent Office

Office européen des brevets

(11) Publication number: **0 128 746**
A2

# EUROPEAN PATENT APPLICATION

(21) Application number: 84303854.8

(22) Date of filing: 07.06.84

(51) Int. Cl.³: **F 16 C 17/03**

(30) Priority: 09.06.83 US 502468

(43) Date of publication of application: 19.12.84
Bulletin 84/51

(84) Designated Contracting States: DE FR GB IT SE

(71) Applicant: AUTOMOTIVE ENGINE ASSOCIATES,
301 South Blount Street, Madison Wisconsin 53703 (US)

(72) Inventor: Showalter, Merle Robert, 301 South Blount
Street, Madison Wisconsin 53703 (US)

(74) Representative: Boydell, John Christopher et al,
Stevens, Hewlett & Perkins 5 Quality Court Chancery
Lane, London, WC2A 1HZ (GB)

(54) **Hydrostatically supported pivoted pad slider bearing with very high load-bearing capacity.**

(57) A pivoted slider bearing supported on a hydrostatic film. The pressurized oil which supports the hydrostatic film is supplied from the wedge film of the bearing. The geometry of the pressure transfer passages between the wedge film and the hydrostatic film arrange the film pressures so that bending moments (and hence deformations) on the pivoting pad are minimized. The hydrostatic film is very thin, so the effective bending stiffness of the pad is the bending stiffness of the hydrostatic film supporting structure. This supporting structure can be very stiff. With the hydrostatically supported pivoted pad, the high load bearing capacity theoretically available with pivoting pads is made available in practice. The hydrostatically supported pivoted pad slider bearing is disclosed for applications in engine connecting rod big-end bearings and engine main bearing caps. A geometry which eliminates yaw instability is disclosed for applications where load is continuous on the pad. A hydrostatically supported pivoted pad slider bearing wherein the lubricant is grease rather oil is also disclosed.

## HYDROSTATICALLY SUPPORTED PIVOTED PAD SLIDER BEARING WITH
## VERY HIGH LOAD-BEARING CAPACITY

### BACKGROUND AND OBJECTS

The fluid mechanical theory of hydrodynamic lubrication is largely worked out, and has been for many years. Working on the assumption that the viscosity of the lubricant in the hydrodynamic film is constant, calculation of the friction, lubricant flow, and film thickness for specified geometry is possible using finite element techniques. Accounting for the viscosity changes which occur due to frictional heating or very high pressures in the oil film is also possible. It is unlikely that anyone will ever again be able to come up with geometries which produce drastic reductions in friction in comparison to geometries that are already known. However, actually producing the required geometries with structures which can bear heavy loads is still a challenge.

Early in this century it was shown by Kingsbury and independently by Mitchell that the pivoted pad slider bearing is theoretically capable of producing minimum friction and excellent oil film stability over a wide range of speeds and loads. The tilted shoe or Kingsbury bearing has been used successfully for more than 70 years, and is characterized by friction and film thickness values in accordance with the theory. However, current tilted shoe bearings are bulky, expensive, and cannot withstand heavy loads per unit bearing area. Because the load bearing capacity of the pivot structure is insufficient, bending deformations of the pad destroy the proper geometrical relations within the wedge film between the sliding parts. Ideally, an infinitely stiff and infinitely strong pivoted pad slider bearing would have very low friction and film stability (at normal speeds with normal oils) for bearing loads in excess of 30,000 psi. In contrast, the prior art pivoted pad slider bearings are seldom safe at loads above 400 psi.

It is the purpose of the present invention to produce a very stiff and very strong pivot structure which permits the pivoted pad slider bearing to be used at extremely high bearing loads. Another purpose is to build a pivoted pad slider bearing that is geometrically compact and inexpensive to mass produce. It is expected that the pivot structure disclosed here will permit Kingsbury-type bearings to be practically applied to the very highly loaded bearings of internal combustion engines, and also to a large number of highly loaded mechanical assemblies.

The invention is a hydrostatically supported pivoted pad bearing applicable as a journal bearing or as a flat pad for thrust bearing service. Hydrostatically supported pivoted pad bearings per se are not new. The pivoted pad bearing of Hollingsworth is described in Patent #4,059,318. The Hollingsworth bearing has been successfully used on ships for more than a decade. In the Hollingsworth bearing, the pivoting pad has a hole communicating between the wedge film and a hydrostatic film side of the pad. This hole feeds oil pressurized by the convergent wedge film to the hydrostatic support geometry floating the pad on a hydrostatic film. However, the pivoting pad of Hollingsworth lacks high load bearing capacity because pressure differentials between the wedge and the hydrostatic side of the pad bend the pad and destroy film stability.

In the pad pivot support of the present invention, a large number of holes communicate between the wedge and the hydrostatic side of the pivot. The hole geometry is arranged so that differential pressures between corresponding points of the hydrostatic and wedge film surfaces are small. This radically reduces pad bending moments, so that the pad maintains its shape without the large distortions which destroy wedge film stability under heavy loads. Compared to the deformations tolerable for the pad, the pad itself is flexible. However, the pad is restrained (within the limits of a very thin hydrostatic film) by the stiffness of the structure which supports the hydrostatic film. This support structure can be very stiff. Because of the increased effective pad stiffness, the pivoted pad arrangement of the present invention can much more closely approximate the theory of an infinitely stiff, infinitely strong pivoted slider. The pad can therefore support much heavier loads than were previously practical.

Misalignment of pivoting pads with respect to journals or other sliding surfaces is harmful. Heavily loaded pivoted pad bearings in journals have, for example, a kind of instability called yaw instability. In yaw instability the central axis of the journal contacting surface of the pad rotates so that it is not parallel with the central axis of the journal. Yaw instability can cause binding. Another purpose of the present invention, therefore, is to produce a

3

hydrostatically supported pivoted pad structure which conforms to small misalignments of the bearing and prevents yaw instability.

Another purpose of the present invention is to eliminate the spragging or binding characteristic of common Kingsbury bearings under start-up conditions.

The advantages of pivoted pad slider bearings lubricated with oil are well known. The same advantages exist when pivoted pads are lubricated with grease. Greases have the advantage that they can be packed into the bearing to eliminate the need for continuous lubricant feeds. A grease lubricated hydrostatically supported pivoted slider bearing arrangement designed to function as a one-to-one substitution for a roller bearing package is disclosed. Calculations indicate that such a bearing package should have load capacity much larger than that of a roller bearing package of the same size. The grease filled hydrostatic bearing should be useful for applications in tooling where centering the journal is important, and should be characterized by effectively infinite fatigue life and low friction.

IN THE DRAWINGS

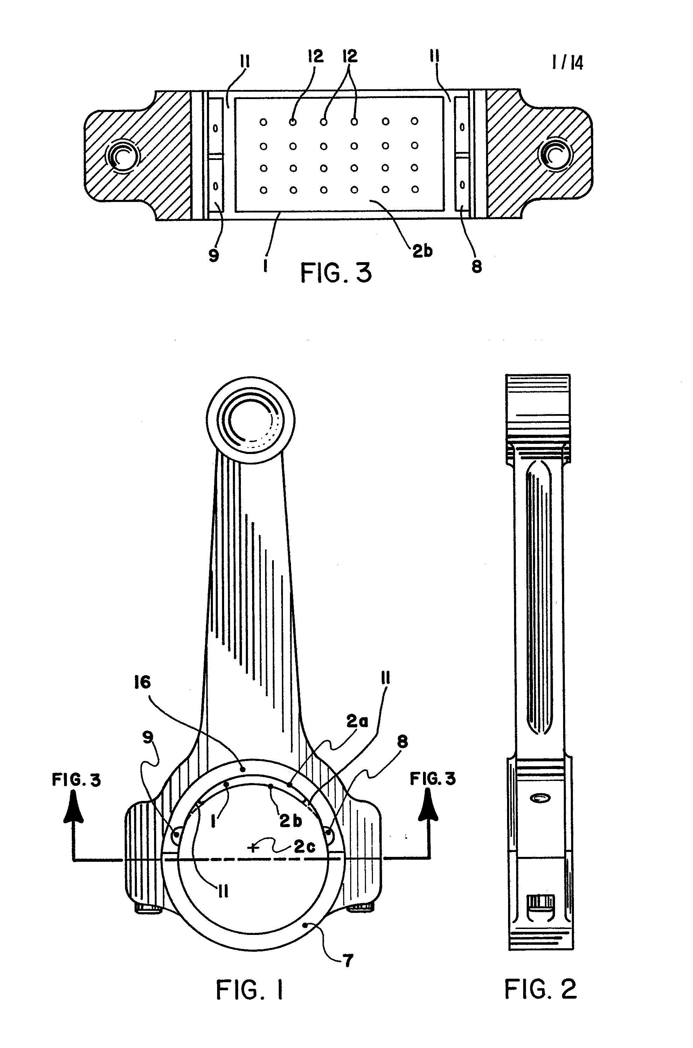

Figure 1 shows a connecting rod for an internal combustion engine including a hydrostatically supported pivoted pad slider bearing 1. Figure 2 is a side view of the con rod of Figure 1. Figure 3 is a sectional view of Figure 1 showing the wedge contacting face 2b of the pad 1 and showing the transfer holes which supply pressure to hydrostatic film surface 2a.

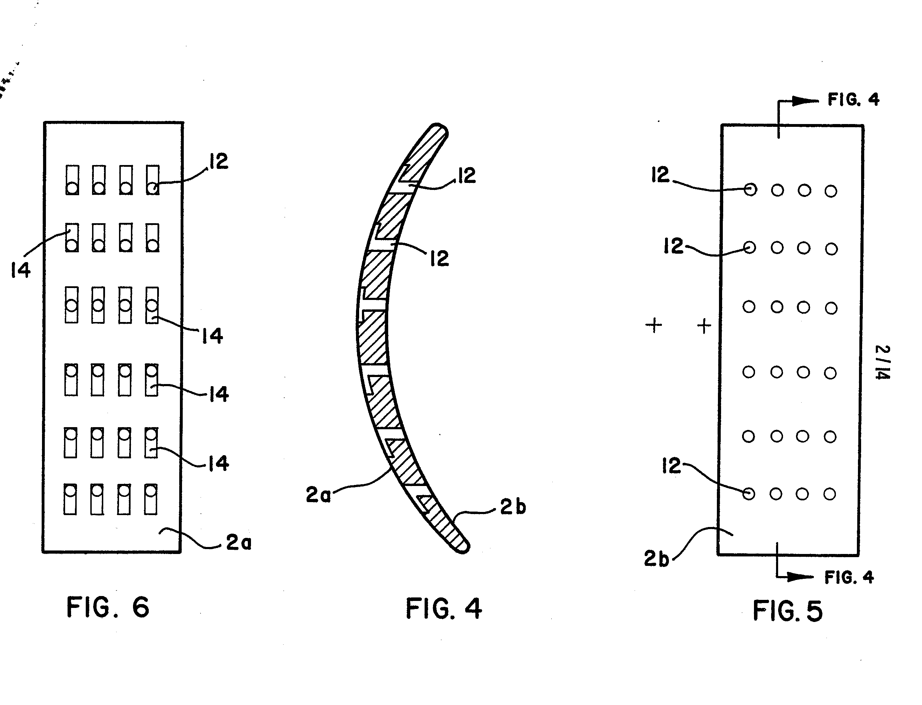

Figures 4, 5, and 6 show the arrangement and mounting of pad 1 in more detail. Figure 4 is an enlarged side cross section view of pad 1. Figure 5 is a view of pad 1 on surface 2b, its wedge film (journal contacting) side. Figure 6 is a view of pad 1 on surface 2a (the hydrostatically supported side) and shows the pressure distribution patches 14 which distribute pressure from the transfer holes.

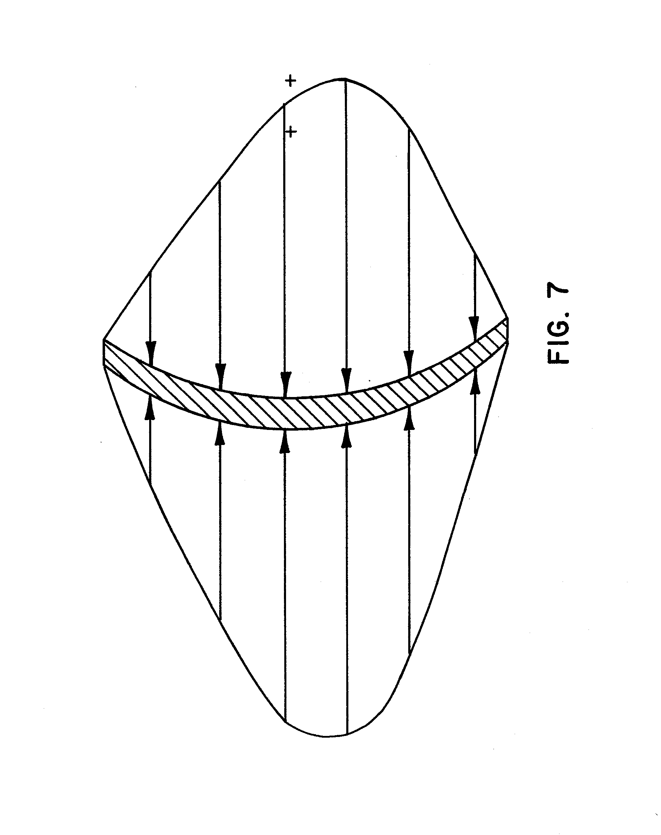

Figure 7 illustrates the ideal hydrostatic film pressure distribution on a pad such as pad 1. In this ideal hydrostatic film pressure distribution, integrated hydrostatic film pressure forces balance integrated hydrodynamic wedge pressure forces. The hydrostatic film pressures also balance the corresponding wedge film pressures on a point to point basis, eliminating bending moments and deformations of the pad.

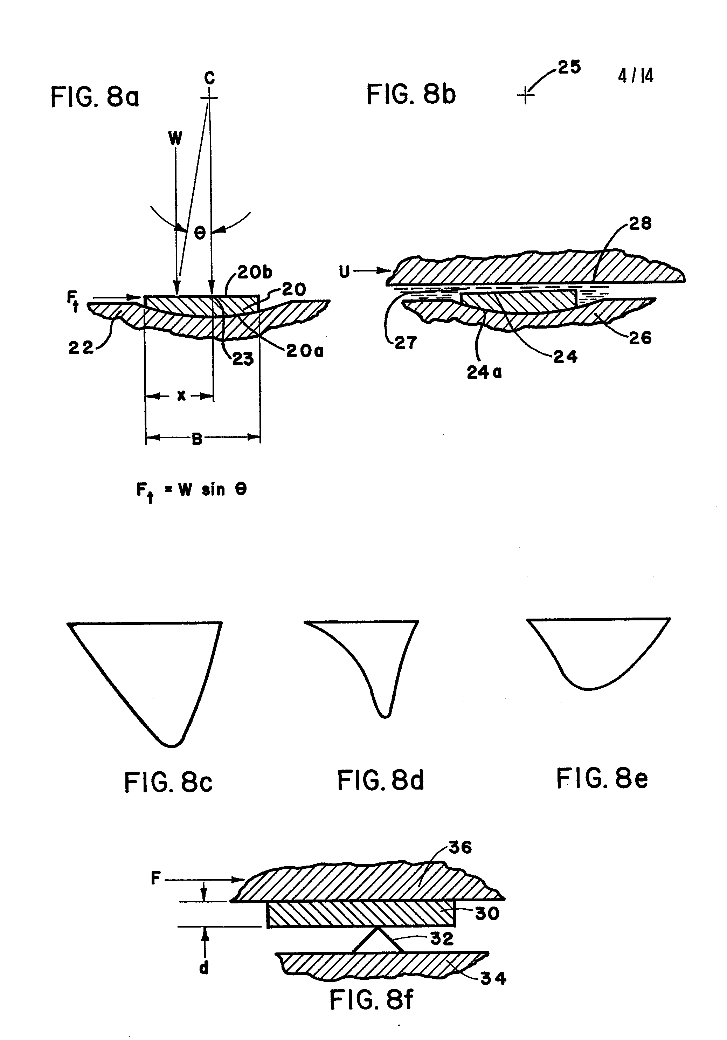

Figures 8a, 8b, 8c, 8d and 8e illustrate the statics of a pivoting flat pad with respect to bearing loads, assuming that a full hydrostatic support film occurs so that the pad is free to rotate about the center of curvature of its hydrostatic support side with zero static friction. Figure 8a is a side view of a flat pad, such as might be used on a thrust bearing, showing how the pad pivots. Figure 8b illustrates the action of this flat pad as a pivoted plane slider bearing, and relates it to the conventional bearing analysis. Figure 8c shows the wedge film pressure shape which balances the pad and maximizes pad performance. Figure 8d shows a wedge film pressure shape generated by too large a wedge convergence angle. Figure 8e shows a wedge film pressure shape generated by too small a wedge convergence angle.

Figure 8f illustrates schematically a pivoted plane slider mounted on a conventional pivot structure to illustrate the pad binding problem called "spragging." Friction forces (which may be very large before a full film is established) twist the pad in a manner which produces divergence between the sliding surfaces, eliminating film load bearing capacity and locking the sliding surfaces together. Figure 8a contrasts this situation in the present invention, where (because the virtual center of pad rotation is on the opposite side of the pad from the conventional geometry of Figure 8f) frictional forces pivot the pad in the convergent direction which produces load bearing wedge films, eliminating the possibility of spragging lockup.

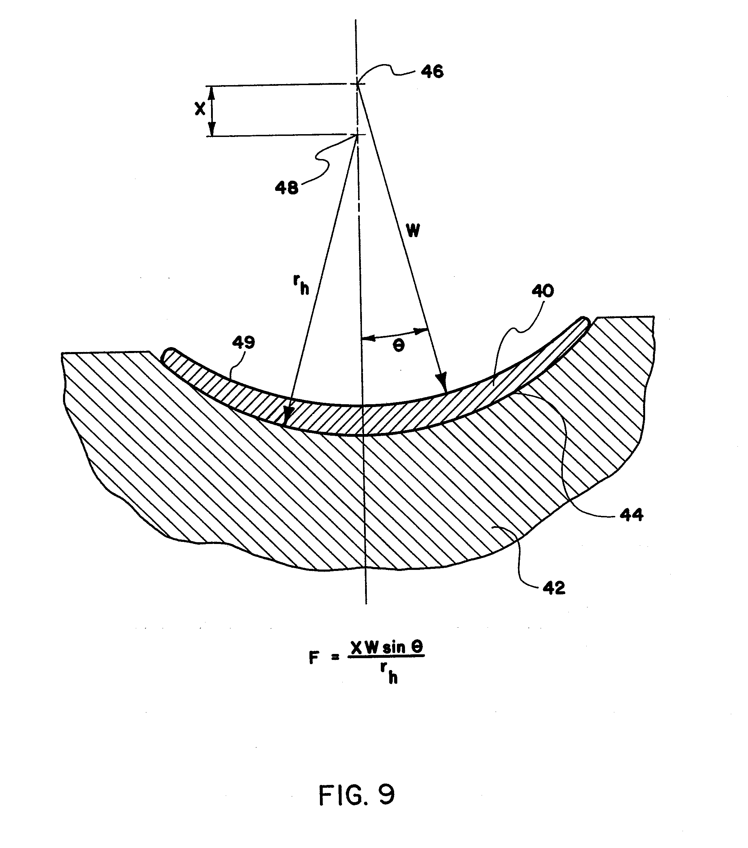

Figure 9 is a side view of a journal-engaging pad such as pad 1 showing the static pivoting forces on such pads.

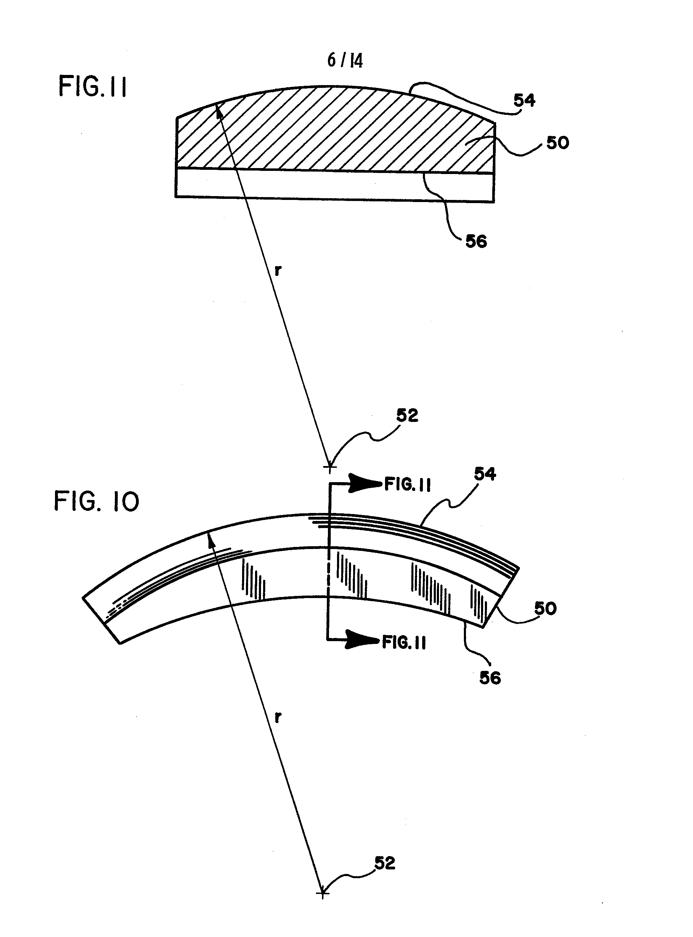

Figure 10 is a side view of a pad analogous to pad 1 but with spherical curvature on the hydrostatic side to permit alignment of the pad to a misaligned journal under conditions where there are fully reversing loads so that the squeeze film forces prevent yaw instability.

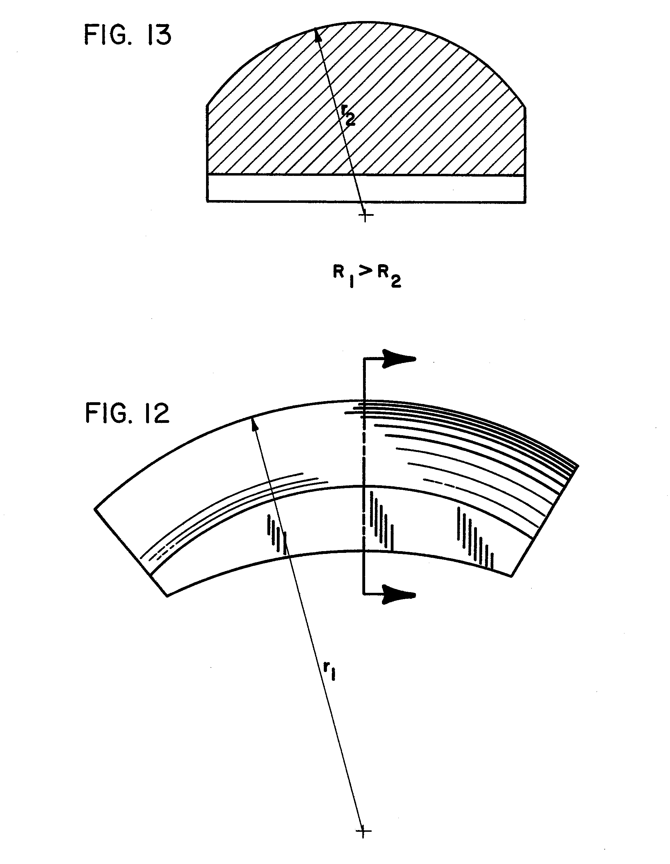

Figure 11 is a cross section of the pad of Figure 10 perpendicular to the journal axis showing its spherical hydrodynamic surface geometry.

5

Figure 12 is a side view of a pad analogous to pad 1 but with compound (torroidal) curvature to allow the pad to compensate for journal misalignment but to restrain yaw instability under conditions where the pad is loaded continuously without load reversal.

Figure 13 is a cross section view of the pad of Figure 12 perpendicular to the journal axis showing the compound curvature required for yaw stabilization.

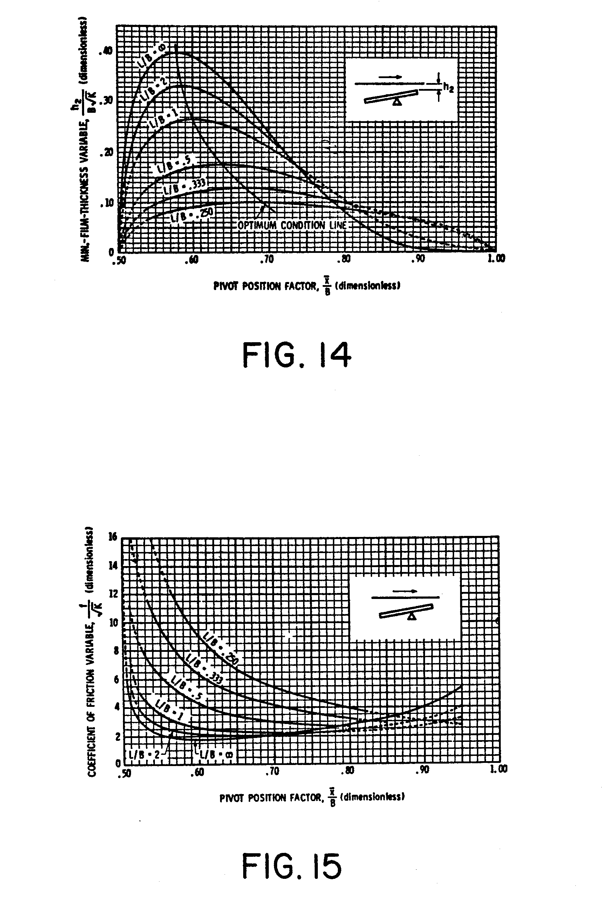

Figures 14 and 15 are taken from "Analysis and Design of Sliding Bearings" by A. A. Raimondi, J. Boyd, and H. N. Kaufman in Standard Handbook of Lubrication Engineering, McGraw-Hill Book Company, 1968, to illustrate the importance of very close geometrical control between the sliding surfaces of a pivoted pad slider (and therefore the control of pad deformations under load). Figure 14 is a copy of Figure 22 from the chapter cited and shows the relationship between $K = \frac{\mu U}{PB}$ and the minimum film thickness in the pad. For heavy pad loadings or compact pads, this minimum film thickness is extremely small, and the geometrical tolerances of the pad must be tightly controlled.

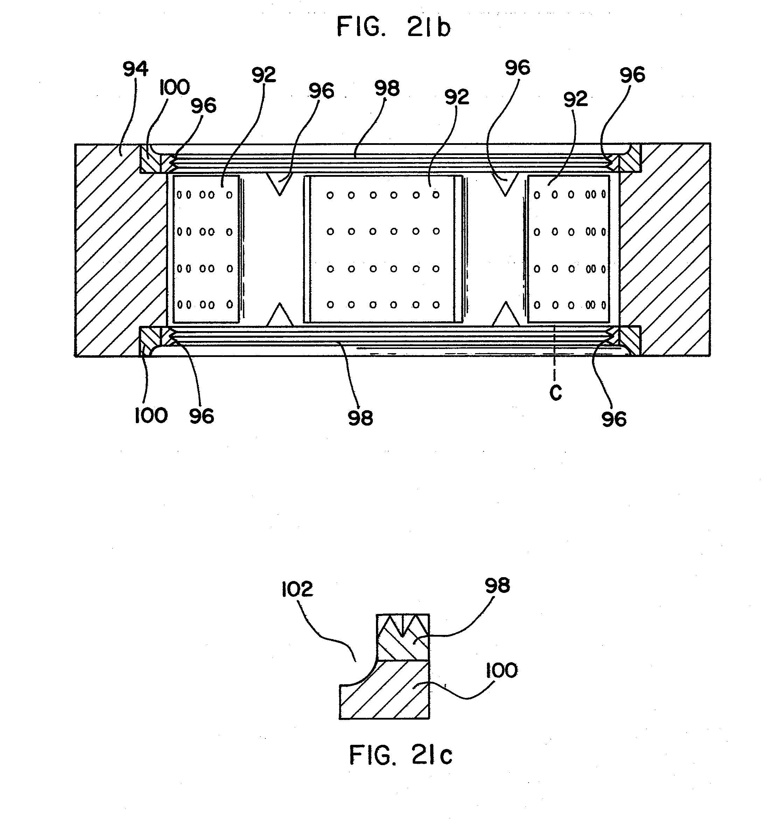

Figure 15 is a copy of Figure 23 from the article previously cited and shows the relationship of the coefficient of friction of a pivoted plane slider to $K = \frac{\mu U}{PB}$ to illustrate the motivation for producing a bearing with heavy load bearing capacity to reduce friction.

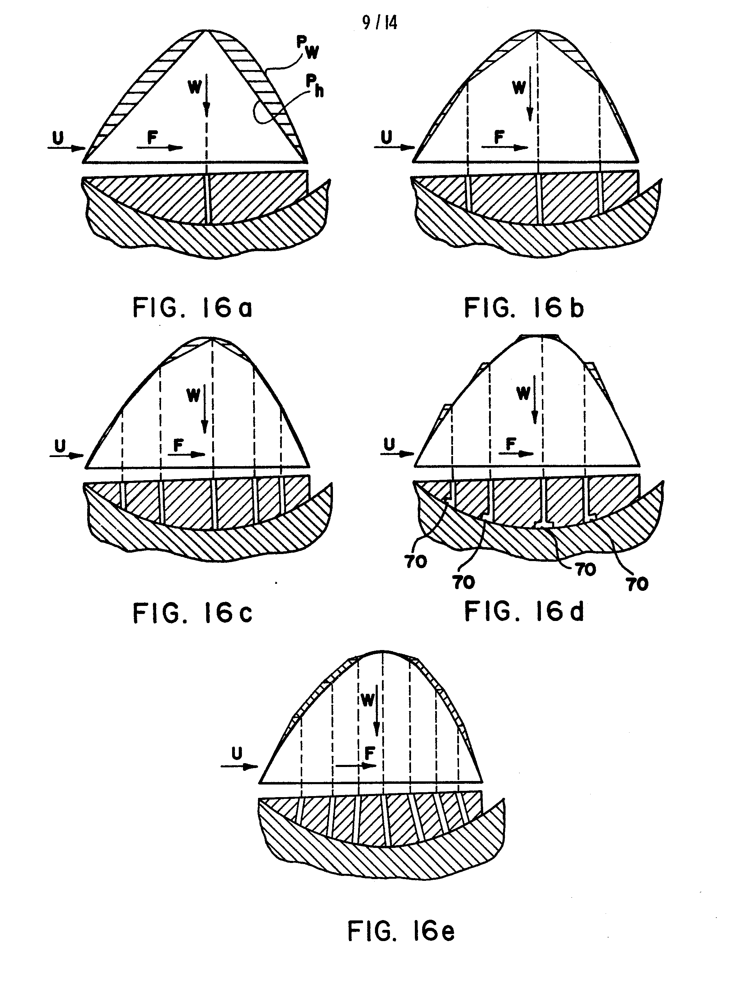

Figures 16a, 16b, 16c, 16d and 16e each show schematically the pressure distribution generated by a wedge film for a two dimensional wedge and shows the pressure distribution on the hydrostatic support side. The figures illustrate the argument for numerous holes to minimize pad bending moments. Figure 16d illustrates the need for distribution patches on the hydrostatic side of the pad to produce pad lift-off from the hydrostatic support surface when parallel distribution holes are used. Figure 16e illustrates how angled pressure distribution holes can produce pad lift-off without distribution patches.

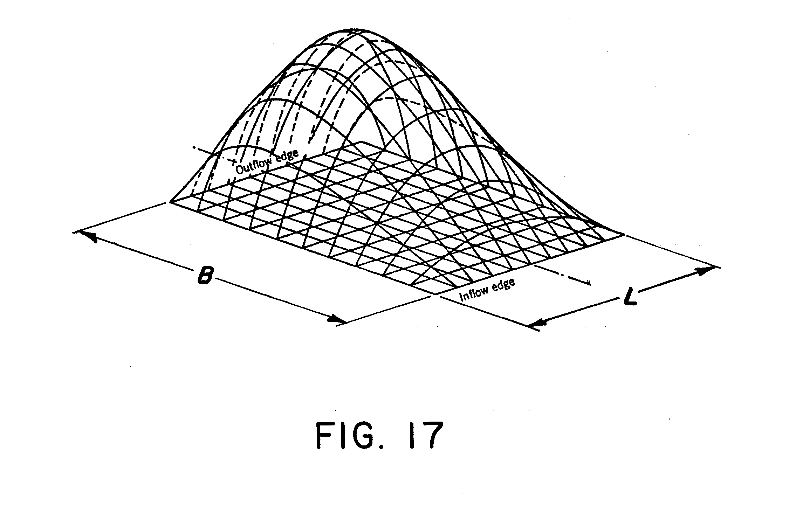

Figure 17 illustrates a view of film pressure in the wedge film of an optimally pivoted flat slider bearing showing pressure variations both parallel and perpendicular to the sliding direction of the pad. (Source: Theory and Practice of Lubrication for Engineers by Dudley Fuller, John Wiley and Sons, 1956, Page 173.)

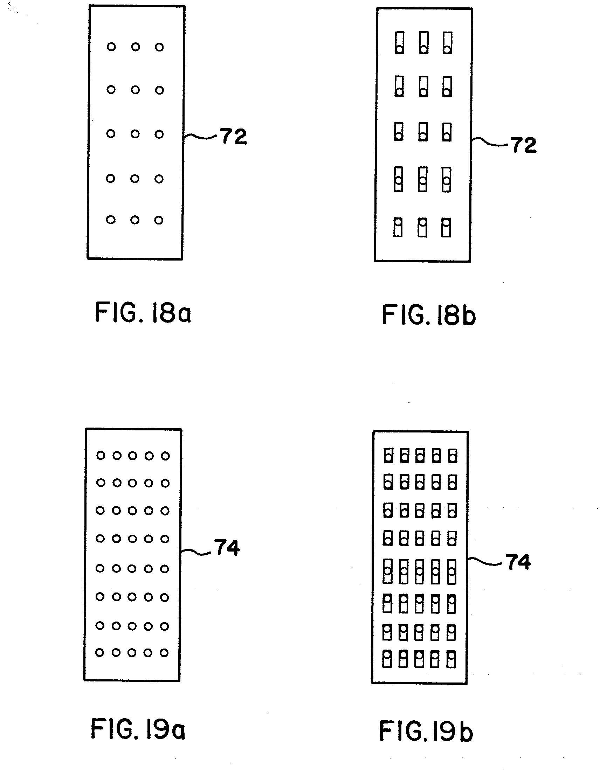

Figures 18a and 18b illustrate a distribution hole pattern for a pivoted pad such as pad 1.

Figures 19a and 19b illustrate a distribution hole pattern with more tightly spaced transfer holes.

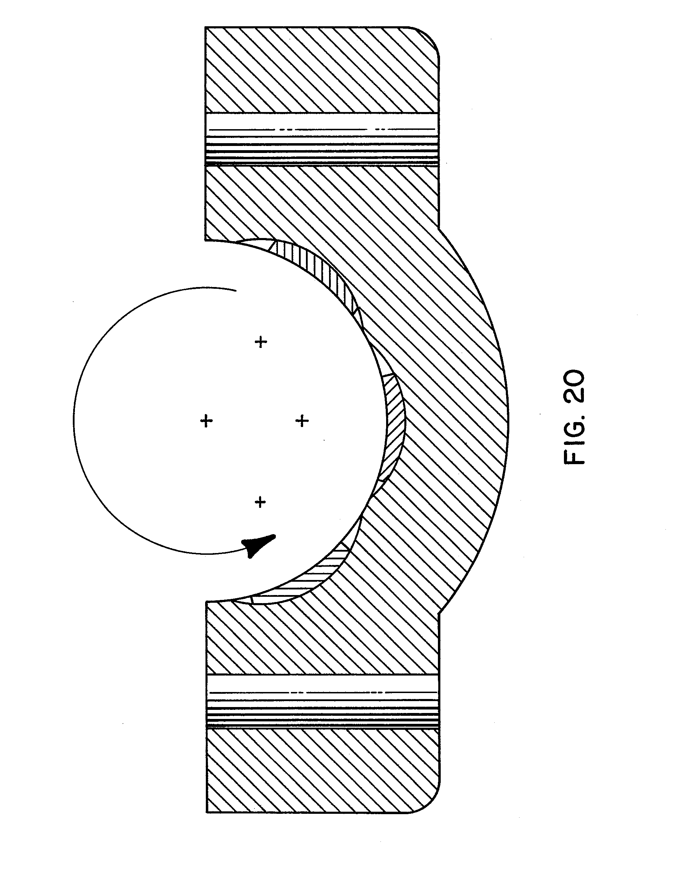

Figure 20 shows three spherically backed hydrostatic pads mounted in the main bearing cap of an internal combustion engine. Figure 20 illustrates an important application of the present invention and also illustrates how the very flexible pivoted pad can be supported by an rigid supporting structure.

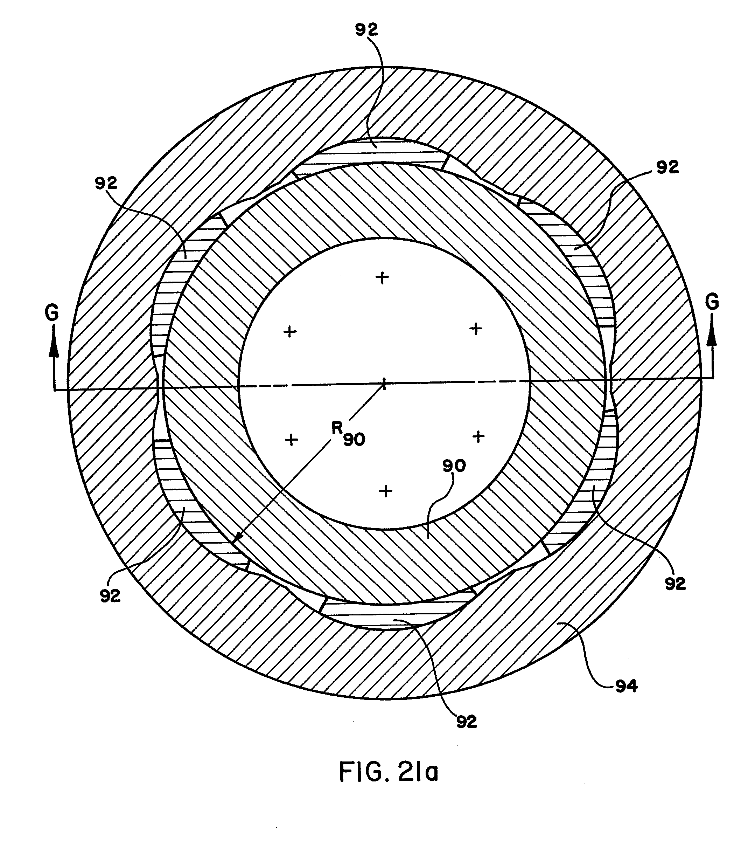

Pivoted pad slider bearings can operate efficiently on greases as well as oils. Figures 21a, 21b and 21c illustrate a grease lubricated pivoted pad slider arrangement designed to substitute for a conventional grease packed roller bearing assembly. Figure 21a is a central cross section perpendicular to the journal of the bearing. Figure 21b is a central cross section of the bearing assembly parallel to the journal axis, illustrating pad arrangement, grease seals, and grease feed geometry. Figure 21c is an enlarged view on dashed line C-C of 21b illustrating the grease seal and grease distribution groove arrangement in the bearing end packing.

DETAILED DISCUSSION

Figure 1, Figure 2, and Figure 3 show views of the pivoted pad of the present invention installed in an automotive connecting rod. Figure 1 shows a side view parallel to the journal and wrist pin axes. Figure 2 shows a side view of the con rod perpendicular to the journal and wrist pin axes. Figure 3 shows a sectional view of Figure 1 (across the parting line between the con rod and the connecting rod cap).

See Figure 1. A connecting rod having a connecting rod cap and journal bearing structure 7 is equipped with pivoted pad slider bearings rather than the conventional journal arrangement on the compression loaded side of the big end journal bearing. Loads on the con rod are (1) direct compression between the center of the wrist pin and the center of the journal due to piston pressure forces, and (2) inertia loads due to the mass of the con rod.

Pivoted pad 1 bears the direct compression load between wrist pin and journal centers. This pad 1 is a thin piece having a journal contacting surface 2b which is cylindrical and of only slightly larger radius of curvature than that of the journal. The opposite side of pad 1 is hydrostatic support surface 2a which may be cylindrical. Surface 2a is closely matched to a mated surface in con rod 16 to form a hydrostatic support. Cylindrical surface 2a floats on a hydrostatic film and is centered on geometrical center point 2c. Pad 1 is free to rotate about this virtual center 2c. This rotation orients surface 2b to produce a wedge film in the manner which will be explained and illustrated with respect to Figure 9.

Smaller pivoted pads 8 and 9 are provided in the con rod to support side forces produced by inertia.

Figure 3 is a sectional view of Figure 1 showing pad 1 and some other geometrical details of the con rod. The wedge film (journal engaging) side 2b of pad 1 is shown, and includes a multiplicity of pressure transfer holes 12. Pressurized oil from these holes feeds hydrostatic surface 2a and maintains a film which separates surface 2a of pad 1 from the corresponding support surface of con rod 16. In both Figure 1 and Figure 3 are illustrated oil reservoir depressions 11. These depression 11 are formed by the clearance between the cylindrical surface which engages surface 2a of pad 1 and the journal (not shown). The clearances are shown by dashed lines in Figure 1. Oil in reservoir depressions 11 should remain when the engine shuts down, and should be particularly useful for start-up lubrication. It should be noted that the bearing arrangement of the con rod shown in Figures 1 - 3 does not restrict oil flow as conventional journal bearings do, so that the oil supply passages in the crankshaft of the engine must be fitted with oil flow restrictors.

The connecting rod shown in Figures 1 - 3 is intended to operate in a four stroke internal combustion engine. In such an engine, the forces between the wrist pin center and journal center go from full compression to full tension every cycle, and the inertial forces on the con rod vary sinusoidally and in proportion to $rpm^2$. At low rpm, side forces and tensile forces are small, and the overwhelming bulk of the bearing load is direct compression on pad 1. It is under these low rpm conditions that conventional journal bearings cause trouble and limit engine performance. Under these low rpm conditions, pad 1 will act as a pivoted pad, but the friction will be somewhat lower than the steady state theoretical value because of squeeze film forces. On every cycle there is a full load reversal where the film between pad 1 and the journal becomes thick. When the load is reapplied during the compression stroke, the approach of the pad to the journal is restrained by the squeeze film forces. The squeeze film forces add load bearing capacity to the steady state hydrodynamic wedge load capacity. This squeeze film action therefore slows the approach of the surfaces. This produces thicker oil films which operate with lower friction. As rpm increases, the importance of the squeeze film forces between the journal and pad 1 increases and the friction of the pivoted pad becomes correspondingly better. The ratio of pad width to circumferential length shown in pad 1 is optimized for squeeze film effects, and would be too narrow for optimal function as a pivoted pad subjected to continuous nonreversing loads. As rpm increases, increasing side loads are imposed on pads 8 and 9 and increasing tensile loads are imposed on the journal-shaped bearing of cap 7. It should be noted that the conventional journal bearing performs well at the high rpms where the load on cap 7 is appreciable, so there is no incentive to use a pivoted pad slider to bear tension loads between the wrist pin and journal centers on the con rod. (For an analogous reason, there is an incentive to produce pivoted pads on the main bearing caps which bear compression loads, but not on the portion of the main bearing arc machined directly into the engine block.)

Figures 4, 5, and 6 show the arrangement and mounting of pad 1 in more detail. Figure 4 is an enlarged side cross section view of pad 1. Figure 5 is a view of pad 1 on surface 2b, its wedge film (journal contacting) side. Figure 6 is a view of pad 1 on surface 2a, the hydrostatically supported side. Figure 6 shows an arrangement of pressure distribution relief patches 14 which distribute pressurized oil from holes 12 to larger areas of the hydrostatic pad. The hole and patch pattern produces hydrostatic pad lift-off and distributes pressure in the hydrostatic film between surface 2a and the corresponding closely matched surface in its receiver (in the case of Figure 1, the con rod). Relief patches 14 are deep enough that they are negligibly restrictive compared to the restriction of the oil film between surface 2a and its corresponding receiver surface. The pressure anywhere on a distribution patch 14 corresponds to the pressure in the corresponding hole 12.

9

Each hole 12 picks up oil at the pressure corresponding to a particular area on the wedge film and supplies oil at this pressure (minus any losses at the entrance of hole 12 on the wedge side) to a particular area on the hydrostatic side of the pad. These input pressures from the patches determine the total pressure distribution in the hydrostatic film between surface 2a and the receiver surface. The patch and hole distribution is chosen so that the total pressure generated force of the hydrostatic pad just balances the pressure generated force of the wedge film at a thin hydrostatic film thickness. The pressure distribution in the hydrostatic film also adjusts itself so as to minimize bending forces and distortions of the pad.

The arrangement of wedge pressure supply holes 12 and distribution patches 14 should be such that the hydrostatic film pressures more than balance the forces on the wedge film if the hydrostatic film is too thin (generating forces to thicken the hydrostatic film) and so that pressure losses from the wedge film to patches 14 reduce the pressure in the hydrostatic film so that it is insufficient to balance the wedge film forces if the hydrostatic film is too thick. When this is arranged, the hydrostatic film will equilibrate to a thickness assuring film stability and zero static friction of the pad pivot, but at a film thickness small enough to minimize losses in wedge film load bearing capacity. Proper arrangement of pressure supply holes 12 and distribution patches 14 will assure this stability of the hydrostatic film over all conditions of bearing loading and bearing speed, since the shape of the film pressure distribution in a pivoted pad wedge is constant for all speeds and loads.

The distribution of holes 12 and pressure distribution patches 14 shown in Figures 4, 5, and 6 is illustrative only. The pressure distribution of the hydrostatic film can be matched more closely to the pressure distribution in the wedge film as the number of distribution holes 12 are increased. The lift-off of the pad is more certain as the area of distribution patches 14 is increased. It can be shown mathematically that an innumerable number of combinations of pressure distribution holes 12 and distribution patches 14 can serve to produce a dynamically stable hydrostatically supported pivot.

The pad geometry illustrated in Figures 4, 5 and 6 uses distribution patches and parallel holes to secure a stable hydrostatic film on surface 2a. Distribution patches analogous to patches 14 are necessary when the pressure distribution holes between the wedge and the hydrostatic side of the pad are parallel. However, the distribution patches are unnecessary if the holes between the wedge film surface 2b and the hydrostatic film surface 2a are drilled at properly chosen angles to each other. This sets up a transfer relation producing enough pressure in the hydrostatic film to secure lift-off. The choice between parallel distribution holes with distribution patches or angled distribution holes is a matter of manufacturing convenience. A mathematical illustration of a hydrostatic pad support where the transfer holes are drilled at an angle to the pad to secure pad lift-off is shown with respect to Figure 16e.

If a pivoted pad is to support extremely heavy loads, bending distortions of the pad geometry must be held to very small values, since the film thicknesses for heavily loaded wedge films are extremely thin (frequently less than .0001 inch). Figure 7 shows the limiting case of a hydrostatic film pressure distribution which eliminates all bending forces on a pad such as pad 1. In this ideal hydrostatic film pressure distribution, the total integrated film pressure forces balance the total integrated hydrodynamic wedge pressure forces. The hydrostatic film pressures also balance the corresponding wedge film pressures on a point-to-point basis. With this pressure distribution there are no net bending moments anywhere on the pad structure. The pressure loads of the hydrostatic film are borne by the structure which supports the hydrostatic oil film. This structure can be much stiffer than the pivoting pad itself.

The effective bending stiffness of the pivoted pad is the bending stiffness of the support structure, and not the much smaller bending stiffness of the pivoting pad itself. The ideal pressure distribution illustrated in Figure 7 will never be exactly achievable, but the distribution hole and distribution patch arrangement can be made so that the hydrostatic film pressures closely approximate the ideal pressure distribution. The larger the number of transfer holes, the closer the ideal pressure distribution can be approximated. As the number of transfer holes increases, distortions of the pad decrease rapidly (at a rate approximately proportional to the fourth power of the number of holes). For thin hydrostatic films, small distortions of the pad tend to push the pressure distribution in the direction of the ideal pressure distribution. This effect increases film stability and acts to moderate pad deformations. These details of hydrostatic film pressure arrangement will be discussed in more detail with reference to Figures 16 - 19.

Figures 8a and 9 show the static forces which pivot the pad until the pad wedge angle establishes a moment balance about the pivot. The figures assume that the pivot operates with zero static friction. Figure 8a is a side view of a flat pad, such as might be used on a thrust bearing, showing pivoting forces. Figure 9 is a side view of a pad analogous to the journal type pad of Figures 1 - 7 showing pivoting forces.

See Figure 8a. A pad 20 has a flat surface 20b which is a wedge film forming surface for an application such as a thrust bearing. The pad 20 has a cylindrical surface 20a centered on point C, which is supported on a hydrostatic film (not shown). Surface 20a corresponds to a receiver surface in supporting structure 22. For the purposes of Figure 8a we assume that a full hydrostatic film occurs between supporting structure 22 and surface 20a so that the pad 20 is free to rotate about point C with zero static friction. In Figure 8a, a load W is shown perpendicular to pad surface 20b at an angle θ from a radial line through the center of cylindrical surface 20a. Force vector W can be resolved into vector components radial with respect to center C and tangential to surface 20a. As illustrated in Figure 8a, the tangential force equals W sin θ. This tangential force acts to rotate (pivot) the pad about center C. Any force W on the pad will tend to rotate the pad unless the line of action of W is in line with the radius from point C (so that θ vanishes). For this to happen on the pivot geometry of Figure 8a, the vector resultant force W must line up a distance X from the left edge of the pad. Point 23 on Figure 8a is the effective pivot point of the pad. Specifically, the pad and pivot structure shown in Figure 8a can be considered as a pivoted pad with pivot position $\frac{X}{B}$ in the analysis related to Figure 15.

Figure 8b and related Figures 8c, 8d and 8e, illustrate the geometry of Figure 8a interacting with a sliding surface and an oil film to function as a pivoted plane slider bearing. A pivoting pad having flat surface 24 pivots around center 25 on a hydrostatically supported pad which is supported by rigid supporting structure 26. A flat sliding surface 28 moves rightward at a velocity U with respect to the stationary pad surface 24a. Pad 24 tilts so that convergent oil film 27 is formed. This film generates pressures to separate the pad and balance the moments about pad center of rotation 25.

A diagram of the pressure distribution generated is shown as 8c. This pressure distribution has its vector resultant centered so that the pad is in equilibrium. Figure 8d shows the pressure distribution which would occur if the pad rotated to produce too large a converging angle. The moment imbalance from this pressure distribution would tend to rotate the pad clockwise toward the pressure distribution of 8c. Figure 8e shows the pressure distribution which would occur if the convergent angle between pad 24 and surface 28 was too small. In this case also, the deviation of the pad angle from the optimal angle produces a vector resultant force which tends to pivot the pad toward the optimal angle. If there is a full hydrostatic film on the pivot (so that the pad has zero static friction) the pad structure shown in Figures 8a or 8b will closely approximate a theoretical pivoted plane slider bearing and will adjust the convergent angle between the pad and the sliding surface to minimize friction over a wide range of load and speed conditions.

The geometry illustrated in Figure 8a is equivalent to a pivot at point 23 with respect to its formation of an oil film. It is not the same as a conventional pivot structure with respect to spragging. Figure 8f illustrates schematically a conventional pivoted plane pad. Pad 30 rests on pivot 32 supported by structure 34 and interacts with moveable surface 36 (which exerts load). Under start-up conditions, when a lubricant film is not established, there is a friction force F from left to right shown in Figure 8f. This force produces a torque (F x d) on the pad 30. This force, called the spragging torque, tends to pull the pad up against the surface into an orientation which locks pad 30 against surface 36. Under the condition illustrated (called spragging) the pad will not lift, but rather binds, sometimes with destructive results. The pivoted pad arrangement of the present invention, illustrated in 8a does not have any possibility of spragging. Force F shown in Figure 8a serves to rotate the pad in the direction of convergent film formation, which is the direction of stability. With the hydrostatic pad design of the present invention, spragging cannot occur since the friction force which in a conventional pad tends to be destabilizing acts in a stabilizing direction.

Figure 9 is a side view of a pad analogous to the journal type pad shown in Figure 1, and illustrates pivoting forces on the pad. Pad 40 is supported by supporting structure 42 and freely pivots on hydrostatic film 44. Film 44 is cylindrical and is centered on point 48, which is a distance X from point 46 which is the center of the journal contacting or wedge film surface 49. A pressure distribution having a vector resultant load W bears on the wedge contacting surface 49. The line of action of W passes through the journal center point 46. The effective moment of the force W about the virtual pivot point 48 is equal to $X\,W\,\sin\theta$. The tangential force on the pad tending to produce pivoting is:

$$F_t = \frac{X\ W\ \sin\ \theta}{r_h}$$

where $r_h$ is the radial distance between hydrostatic film surface 44 and point 48. Pad 40 can pivot to an optimal convergence angle in a manner precisely analogous to the pivoting which has previously been explained with respect to Figure 8b.

It should be noted that the angle of convergence of tilting pads with normal oils and at normal loads is extremely small. Convergent angles are .001 radians or less. Minimum oil film thicknesses are typically less than a thousandth of an inch, and may be less than a ten thousandth of an inch. These angles and dimensions are so small that issues of alignment and twisting which would seem to be trivial are of great practical importance to the operation of heavily loaded bearings. It is not the fluid film theory which fails when oil films break down, but some geometrical imperfection which causes reality to depart from theory.

A major practical difficulty in bearing design is compensation for the inevitably imperfect alignment between sliding surfaces. Figures 10, 11, 12 and 13 show hydrostatic pad geometries which are arranged to adjust for some misalignment between journal bearings (or flat surfaces) and the pivoted pads. Figures 10 and 11

14

illustrate a hydrostatic pad surface which is spherical. The spherical curvature on the hydrostatic pad side permits alignment of the pad to a misaligned journal and is applicable under conditions where there are fully reversing loads so that squeeze film forces prevent yaw instability.

See Figure 10. Pad 50 has hydrostatically supported surface 54 which is spherical with center 52. Figure 11 shows a cross section of pad 50 perpendicular to the journal axis to further illustrate the spherical shape of hydrostatic surface 54. Geometrically, the shape of hydrostatic surface 54 does not act to align journal contacting surface 56 with the axis of the journal. If the pad were to rotate with respect to the journal, it might bind, possibly with destruction of the bearing and the machine of which it formed a part. This binding due to rotation of the pad with respect to the journal is called yaw instability. However, if the pad in Figures 10 and 11 is installed in a service where there will be frequent cyclic load reversals (for example in the main bearing caps of an internal combustion engine), squeeze film effects will serve to prevent yaw instability so that the spherical geometry, with its alignment advantages and ease of manufacture, can be used. Specifically, in a reciprocating machine having fully reversing loads there will be a time every cycle when a thick oil film will be established between pad surface 56 and the journal (not shown). When the journal produces force against the pad, squeeze film pressures will restrain the approach between journal and pad. These squeeze film pressures are proportional to the inverse third power of film thickness. The squeeze film pressures act to align the pad surface 56 with the journal, since any part of surface 56 which is close to the journal will produce large squeeze film ressures tending to pivot or rotate the pad into alignment. The squeeze film effects which occur in this fully reversing load context therefore prevent yaw instability and make the spherical geometry of surface 54 appropriate for service in applications such as automotive main bearing caps. Under the fully reversing conditions the spherical hydrostatic geometry should produce a close approximation of perfect alignment between pad and journal.

However, in situations where yaw instability is a risk because of continuous heavy loading, the spherical hydrostatic geometry illustrated in Figures 10 and 11 may not be acceptable. In these applications, a torroidal geometry illustrated in Figures 12 and 13 can produce the required alignment without yaw instability. Figure 12 is a side view of a pad analogous to pad 1 but with compound (torroidal) curvature to allow the pad to compensate to some degree for journal misalignment, but to restrain yaw instability under conditions where the pad is loaded continuously. Figure 13 is a cross section view of the pad of Figure 12 perpendicular to the journal axis showing the compound curvature required for yaw stabilization. The hydrostatic pad geometry illustrated in Figure 12 and Figure 13 cannot exactly compensate for all possible journal misalignments, since it can rotate on two but not three axes, but it works well. A torroidal pivot geometry pad used for thrust bearing service, where the wedge contacting surface is flat, can exactly compensate with a torroidally shaped hydrostatic film surface while restraining yaw instability.

Figures 14 and 15 are taken from "Analysis and Design of Sliding Bearings," by A. A. Raimondi, J. Boyd, and H. N. Kaufman in Standard Handbook of Lubrication Engineering, McGraw-Hill Book Company, 1968, to illustrate the importance of very close geometrical control between the sliding surfaces of a pivoted pad slider. These charts are calculated for the ideal case of a geometrically perfect, infinitely strong and infinitely stiff pad operating with an oil of constant viscosity. The chart indicates that a pivoted pad wedge film can support extremely heavy loads if the effective stiffness and strength of the pad is great enough. Figure 14 is a copy of Figure 22 from the chapter cited and shows the relationship between the bearing parameter $K = \frac{\mu U}{PB}$

[where $\mu$ = viscosity (reyns)

U = sliding velocity (in/sec)

P = load (psi)

B = length of pad in the direction of motion]

and the minimum film thickness in the pad. Using these charts (Figures 14 and 15), it can be shown that this minimum film thickness is typically quite small and may be significantly less than .0001 inch for heavy pad loadings and compact pads.

Figure 15 is a copy of Figure 23 from the article previously cited and shows the relationship of coefficient of friction of the pivoted pad slider to $K = \frac{\mu U}{PB}$ to illustrate a motivation for producing a highly loaded pad to reduce bearing friction. Friction is

proportional to $\sqrt{K}$ and it is therefore desirable to minimize K for a specific service. Heavier permissable bearing loads (which also make it possible to design machines in more compact form) serve to reduce friction with the pivoted pad slider. The pivot structure of the present invention is expected to radically increase permissable bearing loads, and thereby significantly reduce friction levels attainable in practice.

This heavy load bearing capacity, with its advantages, depends on the minimization of pad deformations due to pressure forces. This reduces to the requirement that the absolute difference in hydrostatic film thickness from place to place in the hydrostatic film be minimized, so that the supporting structure (for example, 16 in the con rod of Figure 1) provides the effective structural stiffness of the pad.

Figures 16a, 16b, 16c, 16d and 16e show schematically the pressure distribution generated on the wedge film and hydrostatic sides of the pivoted pads. Figures 16a, 16b and 16c show in two dimensions the argument for numerous holes to minimize pad bending moments and distortions. Figure 16d also illustrates the needs for distribution patches analogous to patches 14 on the hydrostatic side of pad 1 in order to produce lift-off for the hydrostatic support film with parallel transfer holes between the wedge film and hydrostatic pad side. Figure 16e illustrates how it is possible with transfer holes drilled at properly chosen angles between the wedge film side and hydrostatic film side to secure pad lift-off and a stable hydrostatic film without the need for transfer patches.

Figures 16a – 16e each show a wedge film, with the wedge film pressure plotted along with the vector resultant W, which shows that the pad has pivoted to balance. Convergence angle M is exaggerated for clarity (conventionally the wedge convergence angle will be .001 radians or less). In 16a, the pivoting pad has one transfer hole drilled perpendicular to the wedge film contacting surface of the pad, which is in line with the maximum film pressure point. Figure 16a assumes that there is a constant thickness hydrostatic film between the pivoting pad and its supporting structure. The figure shows the case for a thin axial groove which distributes the pressure from the distribution hole axially along the pad so that the projected pressure distribution in the hydrostatic film will be the line segments shown in 16a. It can be seen that the parabolic wedge pressure distribution is approximated by a triangle in the case of Figure 16a. $P_w$ denotes the wedge pressure, $P_h$ shows the projection of the hydrostatic pressure and the shaded area denotes the amount the hydrostatic pressure falls short of the wedge pressure. It is evident that the pad of Figure 16a will not maintain a full hydrostatic film.

Figure 16b shows an analogous case, but with three pressure transfer holes. The projected pressure distribution on the hydrostatic pad side now more closely approximates the wedge film. Figure 16c is analogous again, but in this case has five presssure distribution holes. In 16c the projection of hydrostatic film pressure more clearly approximates the wedge film pressure. It can be shown mathematically that with additional transfer holes (additional approximating line segments) the area under the wedge curve and the line segment curve approach each other more and more closely.

In the example shown in Figures 16a, 16b, and 16c, it should be apparent that the deformation producing bending moments on the pad decline rapidly as the number of transfer holes increase. The decline in bending moments on the pads in the figures will go as $\dfrac{1}{(n + 1)^4}$. The consequent pad deformations would go as $\dfrac{1}{(n + 1)^5}$ where n is the number of transfer holes in Figures 16a, 16b or 16c. For three dimensional pads, the relationship between bending deformations and transfer hole number is not so clear as in the two dimensional case, but bending deformations will decline approximately as $\dfrac{1}{(n + 1)^4}$ where n is the number of properly spaced transfer holes. Increased numbers of transfer holes can reduce pad bending moments and deformations.

Figures 16a, 16b, and 16c show the advantage of increased numbers of transfer holes in pads, but none of the pads illustrated in these figures would generate sufficient hydrostatic film forces to lift the hydrostatic film and freely pivot the pad. As can be seen from the figures, the approximating line segments approximate the wedge film from below, so that the hydrostatic film force $F = \int P \, dA$ on the hydrostatic film is less than the integrated pressure generated force of the wedge film. For transfer holes that are parallel, the hydrostatic film force will always fall short of the wedge film force. If at some instant in time the conditions shown in 16a or 16b or 16c existed, wedge film pressures would thin the hydrostatic film to the point where the hydrostatic film would break down. When the film breaks down, the pad cannot pivot freely.

Figure 16d shows how distribution patches 70 (which are analogous to distribution patches 14 on the pad 1 shown in Figures 1 - 6) distribute pressure in a manner which will cause and maintain pad lift-off. The pressure distribution shown in Figure 16d would cause the hydrostatic film to thicken. As the hydrostatic film thickens, flow through the hydrostatic film would increase as the third power of film thickness. A point would rapidly be reached where pressure from the wedge film to the entrance holes would reduce the pressure supplied to the hydrostatic film to a level where the hydrostatic film and the wedge film balanced. This is the condition required for stability of the hydrostatic film. If the hydrostatic film is too thin, strong forces are generated to thicken it. If the hydrostatic film is too thick, the hydrostatic film cannot bear its load and automatically thins itself. The equilibrium is stable and nonoscillatory, since the hydrostatic film is strongly damped by squeeze film effects.

The illustrations of Figures 16a, 16b, 16c and 16d show cases where the transfer holes are parallel and perpendicular to the wedge film surface of a flat pad. Lifting of the pad can be achieved without transfer patches if the transfer holes are at properly chosen angles to each other. The hole angles must be chosen to transfer pressure from a higher pressure position on the wedge film side of the pad to a lower pressure position on the projected hydrostatic film side.

Specifically, the vector resultant force of the wedge film pressure distribution has a specific direction. A one-to-one correspondence between points on the pivoted pad's wedge film side and hydrostatic side can be established by connecting points on the two sides by lines parallel to the wedge film pressure vector resultant. The transfer hole angle between the wedge film and hydrostatic side of the pad will tend to lift the pad if the transfer hole takes oil from the pickup area on the wedge film side to an output area on the hydrostatic side which corresponds to a lower pressure area on the wedge film side. Figure 16e illustrates this, with transfer holes which are perpendicular to the hydrostatic film side so that higher pressure points in the wedge film transfer pressure to lower pressure points on the hydrostatic film side. In two dimensions it is clear that this sort of transfer arrangement with angled holes will produce pad lift-off. In the three dimensional case the situation is more complicated, but an acceptable hole position and angle arrangement can be arrived at using computer computation procedures which will be discussed later.

The bending moments on the pad will be smaller with the nonparallel hole arrangement than with the parallel hole and transfer patch arrangement, but the difference in bending moments is usually not significant. The choice between transfer patches and angled holes and nonparallel holes without transfer patches is a matter of manufacturing convenience. In the case of pivoted pads which function in journal bearings, it is often possible to use the nonparallel hole arrangement where the holes are normal to the journal contacting surface and radial with respect to the journal bearing center. This hole distribution pattern is easy to manufacture.

It is impossible to eliminate all bending moments on the pad. However, the deformations produced by these bending moments can be made very small. Real pads and supporting structures will also have some degree of geometrical imperfection. It is therefore useful that small deformations of the pad tend to make the hydrostatic film more, rather than less, stable.

Differences in hydrostatic film thickness of as little as ten microinches from place to place can significantly change the pressure distribution developed within the hydrostatic pad film. For heavy loads the pivoted pad is very flexible with respect to these tiny deformations. (This can be checked readily considering the pad as a curved beam with small beam depth and applying the straight beam formulas $\gamma = \dfrac{MC}{I}$ and $r = \dfrac{EI}{M}$ .)

Small deformations of the pad change the thickness of the hydrostatic film in a manner favorable to stability as follows. The flow resistance of any surface area in the hydrostatic film varies inversely with the cube of film thickness, so that cutting film thickness in half increases the local film flow resistance eight times. A pad deformation thinning the film locally will cause pressures around the deformed area to rise because of the increased flow resistance, thereby resisting further thinning of the film. When the hydrostatic film is very thin (and the hydrostatic film may be as thin as 10 microinches in some cases) minute deformations of the pad generate large pressure forces resisting further deformation. This stabilization effect is practically useful and compensates not only for pad bending deformations but for structural imperfections producing mismatches between the parts.

Real pivoted pads are three dimensional, and not the idealized two dimensional pads shown in Figures 16a - 16d. For pads with a finite width L, side leakage is important and the interaction of the wedging forces and side leakage generates a three dimensional wedge film pressure distribution. Figure 17 illustrates the pressure pattern in a pivoted pad slider bearing with side flow, and labels pad width L and pad length B, as L and B are used in charts Figure 14 and Figure 15. This illustration of Figure 17 is taken from page 173 of Theory and Practice of Lubrication for Engineers by Dudley Fuller, John Wiley and Sons, 1956. Using computerized finite element techniques it is now possible, with specified geometry and viscosity, to calculate the pressure distribution of a particular pivoted pad.

It is possible to calculate the film pressure distribution on the hydrostatic side of the pad with a particular distribution of transfer holes with or without distribution patches on the assumptions 1) that the hydrostatic film thickness is uniform all over the hydrostatic pad surface and 2) that the hydrostatic film is sufficiently thin so that film flow is too small to affect wedge film pressures. Using these assumptions, the pressure distribution on the hydrostatic pad can be calculated using computerized two dimensional finite element computations exactly analogous to those used for two dimensional heat transfer problems. In this calculation, pressures at each of the hole outlets are set at wedge film pressures and the pressure at all edges of the pad are set at zero. If there are transfer patches, these patches are at the pressure supplied by the transfer holes connected to each patch. For a specific hole pattern (and patch pattern) on the hydrostatic side, the finite element computation will define pressures everywhere on the hydrostatic film surface. Therefore, for every point on the hydrostatic pad surface there will be a defined pressure differential between the hydrostatic surface and the corresponding point on the hydrodynamic wedge film surface. Bending moments on the pad can be determined and relative merits of different patch and transfer hole patterns can be compared. The total film force $\int PdA$ of the hydrostatic film can be computed. It can therefore be determined whether hydrostatic film force can overcome hydrodynamic wedge film forces to lift the pad. It is desirable to have the average calculated hydrostatic pressure point-to-point exceed its corresponding wedge film pressure by ten percent or so. This will assure that the hydrostatic film grows until a pressure differential across the transfer holes from the wedge film side balances the film forces on the pad.

The transfer hole (and pressure distribution patch) design procedure described above is based on conservative and safe assumptions since small pad deformations will change the hydrostatic pad pressure distribution in the direction of stability. Maximum pad deformations can be reduced and pad bearing load capacity can be increased as the number of transfer holes is increased. The optimal trade-off between manufacturing difficulty and pad peformance will vary from application to application.

Figures 18a and 18b illustrate a hole distribution pattern for a pivoted pad such as pad 1 having a small number of transfer holes and transfer patches. Figure 18a shows the wedge film side and 18b shows the hydrostatically supported film side of pad 72.

Figures 19a and 19b illustrate a distribution hole pattern with more tightly spaced transfer holes, which would have smaller pad deformations and greater total load bearing capacity. Figure 19a shows the wedge film side and Figure 19b shows the hydrostatic surface side of pad 74.

For the film pressure distribution discussions of Figures 16, 17, 18 and 19, it is worthwhile to consider the lift-off of the pivoted pad from start-up conditions. Once the wedge film is formed, the distribution grooves will assure that there are significant parts of the hydrostatic pad which are at pressures greater than the corresponding pressures on the wedge film. Bending of the pad in these localities will assure partial lift-off of the hydrostatic film. Deformations of the pad of much less than a microinch will start pad lift-off. Under these partial lift-off conditions, pressure will build up from around the high pressure points causing the lift-off of increasing areas of the pad. It is important that hole distributions be frequently enough placed that there is lift-off everywhere. It should be noted that the stiffness of the pad, although too small to make the constant hydrostatic thickness assumption reasonable, is still important to assure smooth curvature from place to place within the pad. Once the pad has lifted off, the third power relationship between hydrostatic film flow and film thickness should establish a robust equilibrium hydrostatic film thickness relationship assuring that the hydrostatic film is stable at all speeds and loads. Average hydrostatic film thickness will vary roughly as the cube root of total wedge film load, so that large changes in bearing load produce much smaller changes in hydrostatic film thickness.

Even in a service requiring rapid pivoting (such as con rod service) sliding velocity between the pivoted pad and its hydrostatic film support structure will be less than one thousandth of the sliding velocity of the surface engaging the wedge side. For this reason, extremely thin hydrostatic films (so long as they are full films) are permissable and desirable and the pads can be designed so that the oil flow required to support the hydrostatic film is less than two percent of total oil flow through the bearing. Such small film oil flows will have only small effects on the load bearing capacity and sliding friction of the wedge film.

In some applications, particularly in those involving reciprocating machinery, squeeze film effects are superimposed on the pivoted pad slider wedge effects. Under certain conditions, these squeeze film effects may dominate the pressure distribution on the wedge film side. The hydrostatic pad should lift off under these squeeze film conditions for the same reasons previously described with respect to the wedge film operating case. The design of bearings for superposition of squeeze film and pivoted pad slider fluid mechanics is the subject of a copending application (S.N. 502,573).

Figure 20 shows three hydrostatically supported, spherically backed pivoted pads mounted in the main bearing caps for an internal combustion engine. This is an application where squeeze film effects are important. Such a main bearing cap package should eliminate the film breakdown which now occurs under heavy load/low rpm conditions. Because squeeze film effects set up during each full engine cycle load reversal will eliminate the possibility of yaw instability, spherical hydrostatic surfaces of the pivoted pads of the main bearing cap are permissible and desirable to produce essentially perfect wedge film geometry for minimum main bearing friction.

The upper $180^o$ of the main bearing (not shown), engages directly to the block and only bears inertial loads. These loads are significant only at high rotating speeds where conventional journal bearings are stable and satisfactory. Therefore, a conventional $180^o$ journal bearing shell against the block should be combined with the main bearing caps shown in Figure 20.

The pivoted pad slider arrangements shown previously have been set up for operation with conventional oils. However, it is also possible to operate a pivoted pad slider with full film lubrication on greases which can be packed in so that the bearing is permanently lubricated without any need for additional lubrication. (See "Full Film Lubrication, Greases" by Gunther Kohn, page 3-13, Standard Handbook of Lubrication Engineering, McGraw-Hill, op cit.) Figures 21a, 21b and 21c show a grease lubricated pivoted plane slider arrangement designed to substitute for a conventional roller bearing assembly. Figure 21a is a central cross section of the bearing. Inner bearing "race" 90 engages with a shaft as would the corresponding part of a roller bearing assembly. The outside part of the roller bearing assembly has its corresponding component in outer support ring 94. The inside curvature of ring 94 is machined with six cylindrical hydrostatic pad receiving surfaces which mount corresponding hydrostatically supported pivoting pads 92. For reversibility, pads 92 are built with an $\frac{X}{B}$ value of .5, and have a radius of curvature slightly larger than the corresponding curvature $R_{90}$ of the outside surface of race 90 (for example with R pad = 1.001 $R_{90}$) so that the pads serve as "crowned" centrally pivoted, pivoted pad sliders. Such pivoted pad sliders have load bearing capacity and friction values near those of optimally pivoted pads, as is illustrated with Figure 30 of "Analysis and Design of Sliding Bearings" in the Standard Handbook of Lubrication Engineering, op cit. The mean radial clearance between 90 and the pads 92 (with zero hydrostatic film thickness) should be in the range between .001 and .003 times $R_{90}$ depending on intended service. Figure 21b shows a sectional view on G-G of Figure 21a with a view of three pivoting

24

pads 92 and also shows the grease seals and grease flow control geometry of end rings 100. A cross section along dashed line C is shown in exploded Figure 21c to show a grease distribution groove. Pressure distribution holes analogous to those of the pad of Figure 5 are shown in the view of 21b.

In addition, roughly triangular raised sections 96 on ring 100 intersect the grease grooves and come close to the surface of race 90. Raised sections 96 serve to pump grease which has leaked sideways past the pads back inward to assure a continuous supply of grease to the slider pads 92. Rings 100 also mount elastomeric lip grease seals 98 to keep packed grease inside the bearing and to exclude dirt. Figures 21a, 21b and 21c do not illustrate an arrangement to control the axial motion of ring 90 with respect to support ring 94, although a number of such arrangements in the roller bearing art are applicable. Calculation indicates that the grease lubricated pivoted pad bearing package of Figures 21a, 21b and 21c will have friction values competitive to or less than those of roller bearings (which have friction coefficients in the range of .002 to .003) particularly under heavy loads. The hydrostatically pivoted bearing package should have much higher maximum load capacity than is possible with roller bearings, because of much smaller stress concentrations. The bearing package in Figure 21 is expected to be particularly useful in machine tools, where strong pressure forces generated in the tilting pads should serve to center ring 90 and the shaft on which ring 90 mounts. The journal centering effect of this bearing package should be closely analogous to that of the pivoted pad package shown in Chapter 34, page 10, Figure 9 of Standard Handbook of Lubrication Engineering, op cit. The greased packed bearing will have the advantage of no external lubrication requirement. In addition, a grease lubricated pivoted pad arrangement such as that shown in Figures 21a - 21c should be characterized by an infinite fatigue life and essentially zero wear so long as the grease does not deteriorate. The design is potentially superior to that of roller bearings in many practical applications.

The load bearing capacity of the hydrostatically supported pivoted pad arrangement of the present invention is limited by pad deformations and precision of manufacture. With careful design and very smooth surfaces, extremely heavy loads can be borne. Since these heavy loads involve quite thin oil films, problems of oil-borne particles must be considered. In many applications, for example the main bearing cap application illustrated in Figure 20, it is believed that the best solution to the particle problem is to build the pivoted pads and the corresponding surfaces in the hydrostatically pivoted support structure surfaces of very hard, very smooth material, so that the hardened surfaces act to crush and clear particles. The stresses involved in this crushing are less than the contact stresses involving the same materials in cams and tappets in the same engines with the same oils. In general, for any of the pivoted pads shown in the drawings it should be mentioned that if the pad is hardened and is operated with an oil having extreme pressure additives, film breakdown at a few points can be tolerated. Spragging cannot occur with these bearings. For very heavy loads, an EP additive may serve to "chemically machine" high spots on the pad to improve geometry over the manufactured geometry and establish full film lubrication after a short break-in period. An EP additive can also be added to the grease packing the bearing shown in Figures 21a - 21c.

The present invention produces a very stiff and very strong pivot structure which permits the pivoted plane slider bearing to be used at extremely high bearing loads. The support structure and pad arrangement is geometrically compact and should be inexpensive to mass produce. It is expected that the pivot structure disclosed here will permit Kingsbury-type bearings to be practically applied to the very highly loaded bearings of internal combustion engines, and also to a large number of highly loaded mechanical assemblies utilizing oil or grease bearings.

IT IS CLAIMED:

CLAIM 1

A hydrostatically supported pivoting pad bearing assembly comprising:

a support element and a pivoting pad member, said support element and pivoting pad member having matched mating surfaces constituting hydrostatic bearing surfaces, said matched surfaces being separated by a full hydrostatic lubricant film so that said pivoting pad member is free to move with respect to the supporting element,

said matched surfaces being formed as surfaces of revolution about a central line called the pivot line so that said hydrostatic bearing surfaces are free to rotate with respect to each other about said pivot line,

the pivoting pad member having on the surface opposite its hydrostatic matched surface a wedge film forming surface which functions as the pivoted pad surface of a pivoted pad slider bearing adapted to permit formation of an optimally shaped converging oil film between said wedge film forming surface and a third member having a coacting sliding surface cooperating with the wedge film forming surface whereby the wedge film forming surface and the sliding surface have corresponding radii of curvature, said wedge film forming surface tilting over a small range of angles about said pivot line so that the wedge angle between the wedge film surface and the sliding surface of the third member establishes an oil wedge film pressure distribution on said wedge film surface, said pressure distribution having a moment at balance about said pivot line, so that said wedge film surface and said sliding surface interact to form a pivoted pad sliding bearing pivoting about the pivot line and supported by the hydrostatic film,

means for transferring lubricant from the wedge film side of the pivoting pad member to the hydrostatic film side, whereby the hydrostatic film pressure substantially matches that on wedge film side throughout the pivoting pad member so that bending deformation of the pivoting pad member is minimized.

CLAIM 2 The invention as set forth in Claim 1 wherein the means for transferring lubricant from the wedge film side of the pivoting pad member to the hydrostatic film side comprises a plurality of through holes distributed over said pivoting pad member.

CLAIM 3 The invention as stated in Claim 2 and wherein there is a wedge film pressure distribution acting on the wedge film side of said pivoted member when said pivoted member has established a moment balance about its pivot line which pressure distribution can be resolved for purposes of static analysis into a single force vector resultant having magnitude and direction, and wherein a one-to-one correspondence between points on the pivot member's wedge film side and hydrostatic film side can be established by connecting points on the two sides by lines parallel to said vector resultant and wherein said through holes each connect a pickup area on the wedge film side with an output area on the hydrostatic film side which corresponds to an area on the wedge film side having a lower wedge film pressure than said pickup area, so that a net force acting to increase hydrostatic film thickness occurs when said hydrostatic film is thinner than its equilibrium film thickness.

CLAIM 4 The invention as set forth in Claim 2 and wherein the holes in the pivoting pad member have enlarged outlet areas on the hydrostatic film side to provide wider distribution of the pressurized lubricant and whereby said enlarged areas more widely distribute the lubricant pressure from said holes to enhance pad member lift-off and modify the pressure distribution on the hydrostatic side of the pivoting pad member to further minimize bending deformation of said member.

CLAIM 5 The invention as set forth in Claim 2 and wherein the coacting surfaces of the pivoting pad and the third member are flat.

CLAIM 6 The invention as set forth in Claim 2 and wherein the coacting surfaces of the third member and that of the pivoting pad member are cylindrical.

CLAIM 7 The invention as set forth in Claim 6 and wherein the radius of curvature of the coacting cylindrical surface on the third member is slightly less than the coacting cylindrical surface on the pivoting pad member.

CLAIM 8 The invention as set forth in Claim 2 and wherein the matched hydrostatic bearing surfaces on the pivoting pad member and said support element are spherical sections.

CLAIM 9 The invention as set forth in Claim 2 and wherein the matched hydrostatic bearing surfaces on the pivoting pad member and said supporting element are cylindrical sections.

CLAIM 10 The invention as set forth in Claim 2 and wherein the matched hydrostatic bearing surfaces on the pivoting pad member and said support element are torroidal sections so that said pivoted pad is constrained from the twisting called yaw instability.

CLAIM 11 The invention as set forth in Claim 2 wherein the lubricant employed is a grease, wherein means are provided to retain the grease in the vicinity of the pivoted pad member, and wherein means are provided whereby the sliding of said coacting sliding surface and said wedge film pivoted member surface feeds grease to the inlet side of the wedge film between said wedge film surface and said coacting sliding surface.

CLAIM 12 The invention as stated in Claim 1 and wherein the hydrostatic, wedge film and coacting surface are hard and smooth so that particles in the oil are crushed and cleared by said surfaces rather than embedded in said surfaces.

0128746

11   12   12   11          1/14

FIG. 3

9    1    FIG. 3    2b    8

16          11

9              2a

FIG. 3    8    FIG. 3

1    2b

2c

11

7

FIG. 1          FIG. 2

FIG. 6

FIG. 4

FIG. 5

2/14

0128746

FIG. 7

FIG. 8a

FIG. 8b

$$F_t = W \sin \Theta$$

FIG. 8c

FIG. 8d

FIG. 8e

FIG. 8f

$$F = \frac{XW \sin \theta}{r_h}$$

FIG. 9

6 / 14

FIG.11

FIG. 10

FIG. 13

$R_1 > R_2$

FIG. 12

FIG. 14

FIG. 15

FIG. 16a

FIG. 16b

FIG. 16c

FIG. 16d

FIG. 16e

Outflow edge

Inflow edge

B

L

FIG. 17

FIG. 18a

72

FIG. 18b

72

FIG. 19a

74

FIG. 19b

74

FIG. 20

0128746

13 / 14

FIG. 21a

0128746

## FIG. 21b

## FIG. 21c